# EUROPEAN PATENT SPECIFICATION

(11) **EP 2 128 735 B1**
(45) Date of publication and mention of the grant of the patent: **27.03.2019**
(21) Application number: 09000093.6
(22) Date of filing: 07.01.2009
(51) Int. Cl.: G05D 23/22, G05B 19/05, G05D 23/19

(54) **Temperature control module and method thereof**
Temperatursteuerungsmodul und Verfahren dafür
Module de contrôle de la température et son procédé correspondant

(30) Priority: 26.05.2008 KR 20080048491
(43) Date of publication of application: 02.12.2009
(73) Proprietor: LS Industrial Systems Co., Ltd, Dongan-Gu Anyang, Gyeonggi-Do (KR)
(72) Inventor: Sin, Yong-Gak, Seongdong-Gu Seoul (KR)
(74) Representative: K&L Gates LLP

(56) References cited:
- DE-A1- 4 405 607
- US-A- 4 209 994
- US-A1- 2006 155 900

## Description

### BACKGROUND OF THE INVENTION

### 1. Field of the Invention

The present invention relates to a temperature control module and a method thereof, and more particularly, to an integral-type temperature control module for integrally performing an input function, a control function, and an output function, and a method thereof.

### 2. Background of the Invention

In general, a temperature controller is being widely applied to various fields such as packaging machines, each kind of industrial kilns, manufacturing apparatuses for semiconductor devices, and plastic molding machines. As recent demands for high performances, miniaturization, and low costs, the temperature controller is required to be combined with a Programmable Logic Controller (PLC).

The PLC indicates a universal control apparatus that can control based on a program by adding a calculation function to a basic sequence control function, by substituting a relay, a timer, and a counter, etc. by semiconductor devices such as an integrated circuit (IC) and a transistor. As a representative temperature control method using the PLC, a Proportional Integral Derivative (PID) control is being the most widely used. PLC based temperature control catering for a diversity of temperature measurement signals is e.g. known from patent document US 2006/0155900A1.

According to the PID control method, a measured temperature value of an object to be controlled is compared with a predetermined target value. If there is a difference between the measured temperature value and the predetermined target value, the measured value is made to become the predetermined target value by adjusting an output value. The PID control method is implemented by combining a Proportional (P) operation, an Integral (I) operation, and a Derivative (D) operation with one another.

In order to perform temperature control by using the PLC, required are an analogue input module for converting a measured temperature value of an object to a digital value; a PID control module for performing a PID operation by using the converted digital value; and an analogue output module for outputting a result value of the PID operation as an analogue value.

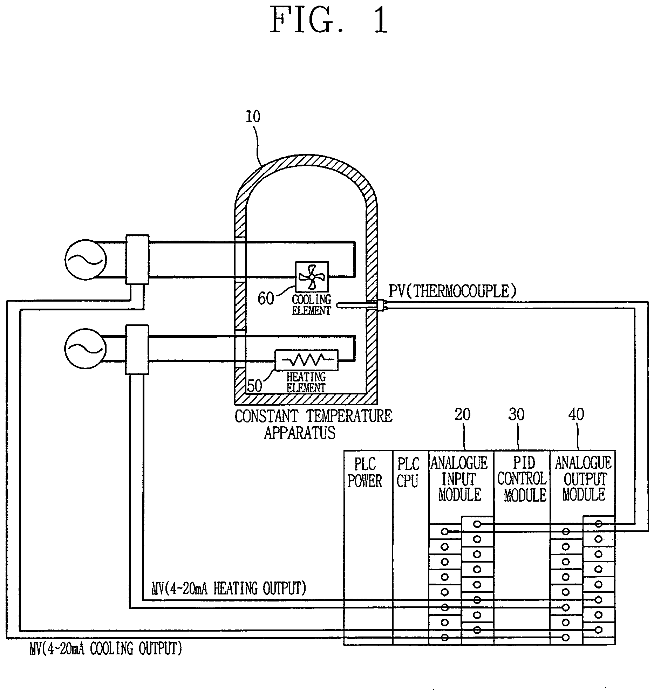

FIG. 1 is a schematic view showing a temperature control apparatus using a Programmable Logic Controller (PLC) in accordance with the conventional art.

As shown, the temperature control apparatus comprises an analogue input module 20 for converting a measured temperature (PV) of an object 10 into a digital value; a PID control module 30 for comparing the measured temperature (PV) converted into a digital value by the analogue input module 20, with a predetermined target value (SV) thereby calculating a modulated value (MV); and an analogue output module 40 for outputting an analogue value corresponding to the modulated value (MV) obtained by the PID control module 30.

Here, the object 10 includes a heating element 50 and a cooling element 60. The heating element 50 and the cooling element 60 are driven under control of the temperature control apparatus, thereby maintaining a constant temperature of the object 10.

Here, the analogue input module 20 converts a measured temperature value of the object 10 into a digital value.

The analogue input module 20 is differently implemented according to a type of a sensor. More concretely, if a RTD(Resistance Temperature Detector, abbreviated as RTD hereinafter) is used as a sensor, the analogue input module 20 is implemented as a RTD module. If a thermocouple is used as a sensor, the analogue input module 20 is implemented as a thermocouple module. And, if a sensor signal is connected to a transducer thus to be converted into a current or a voltage for input, the analogue input module 20 is implemented as a current input module or a voltage input module.

When the measured temperature value (PV) converted into a digital value by the analogue input module 20, is different from the predetermined target value (SV), the PID control module 30 calculates a modulated value (MV) so that the measured temperature value becomes the predetermined target value.

The analogue output module 40 outputs an analogue value corresponding to the modulated value (MV) by the PID control module 30. To the analogue output module 40, a heating output terminal and a cooling output terminal are connected, respectively.

The PID control module 30 controls the analogue output module 40, thereby implementing heating output performance or cooling output performance by the analogue output module 40.

For instance, when the object 10 is to maintain a temperature of 200°C, the temperature of 200°C corresponds to a predetermined target value (SV). If the present measured temperature value (PV) input from the analogue input module 20 is less than 200°C, the PID control module 30 implements heating output performance by the analogue output module 40 thereby to increase temperature of the object 10.

On the contrary, if the measured present temperature value (PV) input from the analogue input module 20 is more than 200°C, the PID control module 30 implements cooling output performance by the analogue output module 40 thereby to decrease temperature of the object 10.

The conventional temperature control apparatus has to be provided with the analogue input module 20, the PID control module 30, and the analogue output module 40, which requires three or more slots of a PLC base.

In this case, a operation setting for each module has to be independently performed, which causes inconvenience. Purchase for each module increases costs for an entire system. In case of a large system, an area occupied by the slots of the PLC base is increased. This requires additional costs when extending the base.

According to a type of a sensor of the temperature control apparatus, the analogue input module 20 has to be implemented as one of a thermocouple input module, a RTD input module, a current input module, and a voltage input module. As a result, when different kinds of sensors are installed, corresponding analogue input modules have to be respectively mounted to the temperature control apparatus.

That is, when a thermocouple and a RTD are used, a thermocouple input module and a RTD input module have to be provided, respectively. This may cause costs to be increased.

Furthermore, input/output values of the analogue input module 20, the PID control module 30, and the analogue output module 40 are transmitted through a PLC CPU(Central Processing Unit). In this case, a scan speed of a PLC user program becomes slow to influence on a control function.

That is, when a scan speed of a PLC user program is fast, a control period is short thereby to enhance a control function. However, when a scan speed of a PLC user program is slow, a control period is long thereby to degrade a control function.

### SUMMARY OF THE INVENTION

Therefore, an object of the present invention is to provide an integral-type temperature control module for integrally performing an input function, a control function, and an output function, and a method thereof.

Another object of the present invention is to provide a temperature control module capable of processing various kinds of input signals by each temperature sensor with using one input means, and a method thereof.

Still another object of the present invention is to provide a temperature control module capable of enhancing a control function by integrally performing, by one control means, a process of converting an input signal into a digital signal, a process of calculating a modulated value through a Proportional Integral Derivative (abbreviated as PID hereinafter) control, and a process of outputting the modulated value.

To achieve these and other advantages and in accordance with the purpose of the present invention, as embodied and broadly described herein, there is provided a temperature control module, comprising: an input means for receiving an analogue signal indicating a measured temperature value of an object, and converting it into a digital signal; a control means for determining a type of an analogue signal input to the input means based on predetermined parameters, controlling the input means to convert an input analogue signal into a digital signal according to the signal type, and performing PID control based on the measured temperature value and a predetermined target value thereby calculating a modulated value; and an output means for outputting the calculated modulated value under control of the control means.

Here, the input means includes first and second input circuit sectors for receiving an analogue signal indicating a measured temperature value of an object, respectively; a signal stabilization circuit sector for stabilizing an analogue signal transmitted from the first input circuit sector, and then transmitting it to the second input circuit sector; an A/D conversion circuit sector for converting the analogue signal transmitted from the second input circuit sector into a digital signal; and a first insulation circuit sector for insulating the input means and the control means.

The analogue signal input to the input means is one or more of a current signal, a voltage signal, a thermocouple signal, and a RTD signal. The current signal is input with a size of 0∼20mA or 4∼20mA, and the voltage signal is input with one size of 0∼5V, 1∼5V, 0∼10V, and -10∼10V. And, the thermocouple signal or the RTD signal is input with a size of 0∼30mV.

When the analogue signal input to the input means is a current signal or a voltage signal, the control means generates a switch control signal so that the first input circuit sector transmits the current signal or the voltage signal to the signal stabilization circuit sector, and so that the second input circuit sector transmits the current signal or the voltage signal stabilized by the signal stabilization circuit sector to the A/D conversion circuit sector.

Alternatively, when the analogue signal input to the input means is a thermocouple signal or a RTD signal, the control means generates a switch control signal so that the first input circuit sector transmits the thermocouple signal or the RTD signal to the second input circuit sector, and so that the second input circuit sector transmits the thermocouple signal or the RTD signal to the A/D conversion circuit sector.

Here, the control means includes an interface circuit sector for receiving the predetermined parameters from outside; a PID calculation circuit sector for performing PID control based on the measured temperature value and a predetermined target value thereby calculating a modulated value; a memory for storing the predetermined parameters and the modulated value; and a controller for determining a type of an analogue signal input to the input means based on the predetermined parameters, thereby controlling so that the input means converts the input analogue signal into a digital signal based on the signal type, the controller for generating a Pulse Width Modulation (PWM) control signal based on the modulated value obtained by the PID calculation circuit sector and the predetermined parameters, and controlling so that the PWM control signal is transmitted to the output means and the output means outputs the modulated value.

The output means includes a second insulation circuit sector for insulating the control means and the output means, and an output circuit sector for outputting the calculated modulated value according to the PWM control signal.

Here, wiring for cooling output, and wiring for heating output are formed at the output circuit sector. And, the calculated modulated value is output to the wiring for cooling output and the wiring for heating output according to the PWM control signal.

To achieve these and other advantages and in accordance with the purpose of the present invention, as embodied and broadly described herein, there is also provided a temperature control method, comprising: determining a type of an analogue signal indicating a measured temperature value of an object input to an input means from preset parameters so as to control a temperature of the object by a control means; controlling, by the control means, so that the input means converts the analogue signal into a digital signal based on the type of the analogue signal; calculating a modulated value by performing PID control by the control means, based on the measured temperature value converted into a digital signal and a predetermined target value; generating, by the control means, a Pulse Width Modulation (PWM) control signal based on the modulated value and the preset parameters, and then transmitting the PWM control signal to the output means; and outputting, by the output means, the calculated modulated value according to the PWM control signal.

Here, the controlling by the control means so that the analogue signal is converted into a digital signal comprises: when the analogue signal is a current signal or a voltage signal, controlling the input means so that the analogue signal is converted into a digital signal through a signal stabilization process; and when the analogue signal is a thermocouple signal or a RTD signal, controlling the input means so that the analogue signal is directly converted into a digital signal without a signal stabilization process.

The outputting the calculated modulated value by the output means comprises: when output information included in the PWM control signal indicates heating output, outputting the calculated modulated value to wiring for heating output; and when output information included in the PWM control signal indicates cooling output, outputting the calculated modulated value to wiring for cooling output.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic view showing a temperature control apparatus using a PLC in accordance with the conventional art;
FIG. 2 is a block diagram showing a configuration of a temperature control module according to the present invention;
FIG. 3 is a schematic view showing a temperature control apparatus including the temperature control module according to the present invention; and
FIG. 4 is a flowchart showing a temperature control method according to the present invention.

### DETAILED DESCRIPTION OF THE INVENTION

Description will now be given in detail of the present invention, with reference to the accompanying drawings.

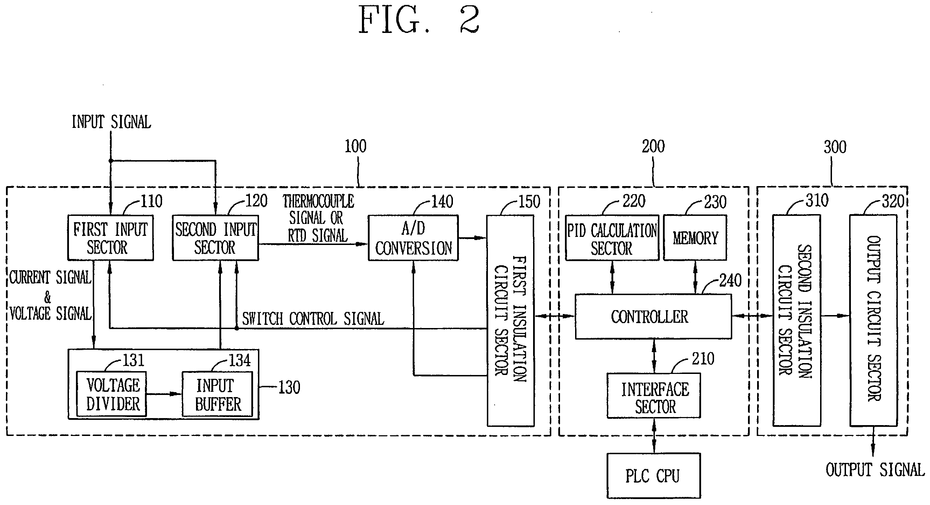

Hereinafter, a temperature control module and a method thereof according to the present invention will be explained with reference to FIGS. 2 to 4.

When details for the well-known related art are considered to cause the main concepts of the present invention to be obscure, explanations thereabout will be omitted. Furthermore, the terms that will be later explained are defined with consideration of the functions of the temperature control module, which may be differently defined according to a user or an operator's intentions or conventions. Accordingly, the definitions will be based on the entire concepts of the specification of the present invention.

FIG. 2 is a block diagram showing a configuration of a temperature control module according to the present invention.

As shown, the temperature control module comprises: an input means 100 for receiving an analogue signal indicating a measured temperature value of an object, and converting it into a digital signal; a control means 200 for determining a type of the analogue signal input to the input means 100 based on predetermined parameters, controlling the input means 100 to convert an input analogue signal into a digital signal based on the signal type, and performing PID control based on the measured temperature value and a predetermined target value; and an output means 300 for outputting a result value obtained through the PID control under control of the control means 200.

The input means 100 includes a first input circuit sector 110, a second input circuit sector 120, a signal stabilization circuit sector 130, an A/D conversion circuit sector 140, and a first insulation circuit sector 150.

The first input circuit sector 110 transmits a voltage signal or a current signal input to the input means 100, to the signal stabilization circuit sector 130, according to a switch control signal generated by the control means 200.

The voltage signal is input within a size of 0∼5V, 1∼5V, 0∼10V, -10∼10V, etc., and the current signal is input within a size of 0∼20mA, 4∼20mA, etc., which requires a signal stabilization process.

The second input circuit sector 120 transmits a thermocouple signal or a RTD signal input to the input means 100, to the A/D conversion circuit sector 140, according to a switch control signal generated by the control means 200.

The thermocouple signal and the RTD signal are input with a size of 0∼30mV, thereby being directly input to the A/D conversion circuit sector 140 without undergoing a signal stabilization process.

To the first input circuit sector 110 and the second input circuit sector 120, at least one of a current signal, a voltage signal, a thermocouple signal, and a RTD signal are input, respectively. Here, it is advantageous that both the thermocouple signal and the RTD signal are input. Accordingly, the input signal preferably includes the thermocouple signal and the RTD signal.

The signal stabilization circuit sector 130 stabilizes the voltage signal or the current signal transmitted from the first input circuit sector 110 by reducing a size of a voltage signal or a current signal and through impedance matching. The signal stabilization circuit sector 130 includes a voltage divider 131, and an input buffer 134.

The voltage divider 131 reduces a size of a voltage signal or a current signal transmitted from the first input circuit sector 110. And, the input buffer 134 performs impedance matching with respect to the voltage signal or the current signal, thereby minimizing reflecting loss of the signal.

The voltage signal or the current signal stabilized by the signal stabilization circuit sector 130 is input to the A/D conversion circuit sector 140 via the second input circuit sector 120.

The A/D conversion circuit sector 140 converts a signal transmitted from the second input circuit sector 120 into a digital signal, according to an A/D conversion control signal generated by the control means 200.

That is, the A/D conversion circuit sector 140 converts a current signal or a voltage signal input via the signal stabilization circuit sector 130 and the second input circuit sector 120, into a digital signal, or converts a thermocouple signal or a RTD signal directly transmitted from the second input circuit sector 120, into a digital signal.

The first insulation circuit sector 150 is implemented as an Optic Coupler, and insulates the input means 100 and the control means 200.

More concretely, the first insulation circuit sector 150 serves to enhance reliability of the temperature control apparatus, and blocks noise, a surge current, and a surge voltage between the input means 100 and the control means 200.

The control means 200 includes an interface circuit sector 210, a PID calculation circuit sector 220, a memory 230, and a controller 240.

The interface circuit sector 210 performs data communications with a PLC CPU(Central Processing Unit of Programmable Logic Controller), thereby receiving predetermined parameters necessary to operate the temperature control apparatus.

The predetermined parameters include an input parameter, a control parameter, an output parameter, etc., and the input parameter includes information relating to an input sensor type of a temperature control apparatus.

The control parameter includes information necessary to perform PID control, such as a PID setting coefficient. And, the output parameter includes information relating to an output type such as heating output or cooling output, and information relating to an output form such as analogue output or ON/OFF output.

The PID calculation circuit sector 220 compares the measured temperature value (PV) converted into a digital value by the A/D conversion circuit sector 140, with a predetermined target value (SV). As a result of the comparison, if there is a difference between the PV and the SV, the PID calculation circuit sector 220 performs PID control to calculate a modulated value (MV) so that the measured temperature value (PV) becomes the predetermined target value (SV).

The memory 230 stores the predetermined parameters transmitted to the interface circuit sector 210, and stores the modulated value (MV) obtained by the PID calculation circuit sector 220.

The controller 240 determines a type of an analogue signal input to the input means 100 based on an input parameter among the predetermined parameters transmitted to the interface circuit sector 210. Then, the controller 240 generates a switch control signal to control the first input circuit sector 110 and the second input circuit sector 120 based on the signal type.

More concretely, when a signal input to the input means 100 is a current signal or a voltage signal, the controller 240 generates a switch control signal so that the first input circuit sector 110 transmits the input signal to the signal stabilization circuit sector 130, and so that the second input circuit sector 120 transmits the signal input from the signal stabilization circuit sector 130 to the A/D conversion circuit sector 140.

On the other hand, when a signal input to the input means 100 is a thermocouple signal or a RTD signal, the controller 240 controls generates a switch control signal so that the second input circuit sector 120 transmits the input signal to the A/D conversion circuit sector 140, and so that the first input circuit sector 110 transmits the input signal to the second input circuit sector 120.

And, the controller 240 generates an A/D conversion control signal to control the operation of the A/D conversion circuit sector 140 based on a type of a signal input to the input means 100.

Furthermore, the controller 240 compares the measured temperature value (PV) with the predetermined target value (SV), thereby controlling the PID calculation circuit sector 220 for PID calculation. And, the controller 240 stores the modulated value (MV) obtained by the PID calculation circuit sector 220 into the memory 230.

Furthermore, the controller 240 generates a Pulse Width Modulation (PWM) control signal corresponding to the modulated value (MV) obtained by the PID calculation circuit sector 220, thereby transmitting the generated signal to the output means 300. Here, the PWM control signal includes information relating to an output type and information relating to an output form.

The output means 300 includes a second insulation circuit sector 310 and an output circuit sector 320.

The second insulation circuit sector 310 may be implemented as a Photo Coupler in the same manner as the first insulation circuit sector 150, and insulates the output means 300 and the control means 200 from noise thereby to enhance reliability of the temperature control apparatus.

The output circuit sector 320 outputs the modulated value (MV) obtained by the PID calculation circuit sector 220 based on the PWM control signal transmitted from the control means 200.

Here, the output circuit sector 320 may perform analogue output or ON/OFF output based on a form of an output included in the PWM control signal, and may perform heating output or cooling output based on a type of an output included in the PWM control signal.

In the present invention, an analogue input module, a PID control module, and an analogue output module for temperature control are integrated as one module. Accordingly, the number of using slots of a PLC base slots is reduced, costs due to purchase of individual modules are decreased, and a volume of the entire system is reduced.

Furthermore, each signal input to the input means is processed with a different path inside the input means according to its type, which enables one input means to process all kinds of input signals. As a result, can be solved the conventional inconvenience and high costs resulting from that input modules have to be respectively provided according to a type of sensors used to perform temperature measurement.

Furthermore, since the control means simplifies a control path by respectively controlling the input means and the output means, time taken to perform input, control, and output functions is reduced. Accordingly, a temperature control performance can be enhanced.

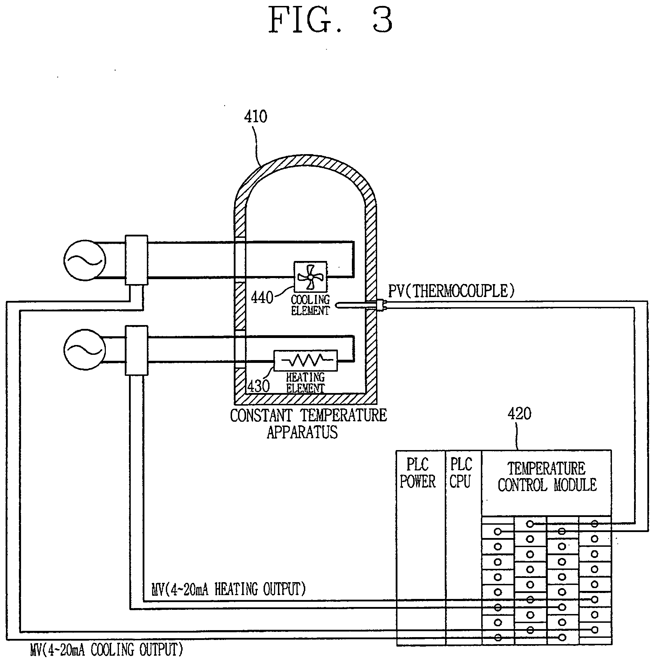

FIG. 3 is a schematic view showing a temperature control apparatus including the temperature control module according to the present invention.

Here, a temperature control module 420 receives a measured temperature value of an object 410 to convert it into a digital value, and compares the measured temperature value with a predetermined target value thereby to calculate a modulated value. And, the temperature control module 420 outputs a value corresponding to the calculated modulated value.

Here, the object 410 includes a heating element 430 and a cooling element 440. The heating element 430 and the cooling element 440 are driven under control of the temperature control apparatus, thereby maintaining a constant temperature of the object 410.

Heating output for driving the heating element 430, and cooling output for driving the cooling element 440 are respectively connected to output circuit sectors of the temperature control module 420.

Here, an input terminal for input, and an output terminal for output are provided at the temperature control module 420, thereby reducing the number of using slots of a PLC base slots into two.

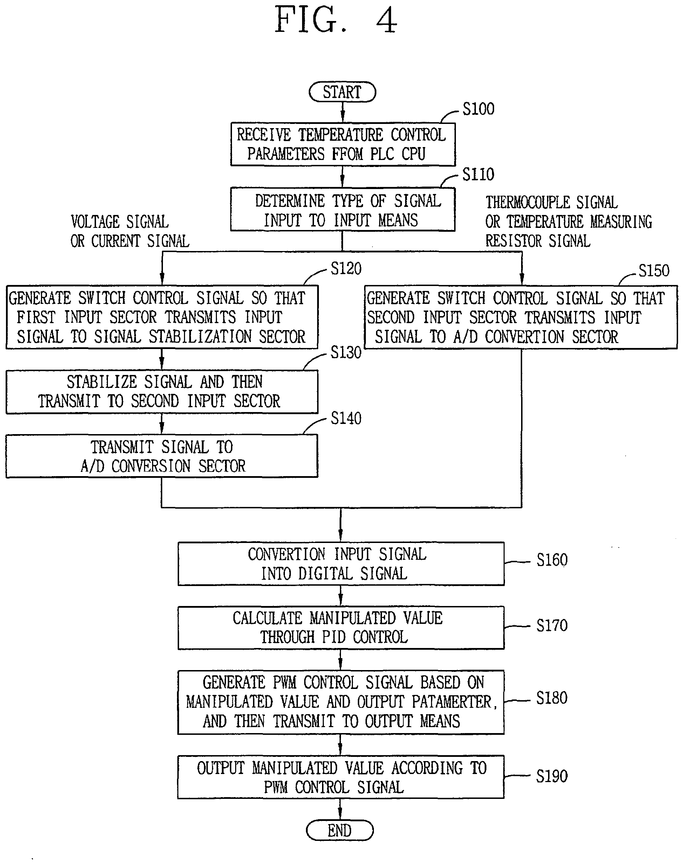

FIG. 4 is a flowchart showing a temperature control method according to the present invention.

As shown, the controller 240 of the control means 200 receives predetermined parameters relating to temperature control, from the PLC CPU through the interface circuit sector 210, and stores the predetermined parameters in the memory 230 (S100).

Then, the controller 240 determines a type of a signal input to the input means 100 based on an input parameter among the predetermined parameters (S110).

As a result of the determination in S110, when a signal input to the input means 100 is a current signal or a voltage signal, the controller 240 generates a switch control signal so that the first input circuit sector 110 transmits an input signal to the signal stabilization circuit sector 130, and so that the second input circuit sector 120 transmits the input signal from the signal stabilization circuit sector 130 to the A/D conversion circuit sector 140 (S120).

Then, the signal stabilization circuit sector 130 reduces the size of the current signal or the voltage signal, stabilizes the signal through impedance matching, and transmits the stabilized signal to the second input circuit sector 120 (S130).

Then, the second input circuit sector 120 transmits the stabilized signal to the A/D conversion circuit sector 140 (S140).

The reason why the stabilized signal (current signal or voltage signal) is not directly transmitted to the A/D conversion circuit sector 140, is due to the input buffer 134 of the signal stabilization circuit sector 130. That is, once the input buffer 134 is configured by Operational-Amplifier circuit(abbreviated as OP-Amp hereinafter) is directly connected to the A/D conversion circuit sector 140, an undesired output may be input to the AID conversion circuit sector 140 since the Op-Amp has an off set voltage even in the absence of input.

As a result of the determination in S110, when a signal input to the input means 100 is a thermocouple signal or a RTD signal, the controller 240 generates a switch control signal so that the second input circuit sector 120 transmits the input signal to the A/D conversion circuit sector 140, and so that the first input circuit sector 110 transmits the input signal to the second input circuit sector 120 (S150).

Then, the A/D conversion circuit sector 140 converts a signal received from the second input circuit sector 120 into a digital signal according to an A/D conversion control signal generated by the controller 240, and then transmits the digital signal to the control means 200 (S160). The digital signal indicates a measured temperature value of the object, i.e., the measured temperature value (PV).

The PID calculation circuit sector 220 compares the measured temperature value (PV) with the predetermined target value (SV) under control of the controller 240. Then, the PID calculation circuit sector 220 performs PID control to calculate a modulated value (MV) so that the measured temperature value (PV) becomes the predetermined target value (SV) (S170).

Then, the controller 240 generates a Pulse Width Modulation (PWM) control signal based on the modulated value (MV) obtained by the PID calculation circuit sector 220, and an output parameter stored in the memory 230, and then transmits the generated PWM control signal to the output means 300 (S180).

The output parameter includes information relating to an output type such as heating output or cooling output, and information relating to an output form such as analogue output or ON/OFF output.

Then, the output means 300 outputs the modulated value (MV) according to the PWM control signal (S190).

Here, the output means 300 performs analogue output or ON/OFF output according to information relating to a form of an output included in the PWM control signal, and performs the output to wiring for heating output or wiring for cooling output according to information relating to a type of an output included in the PWM control signal,

In the present invention, an analogue input module, a PID control module, and an analogue output module for temperature control are integrated as one module. Accordingly, the number of using slots of a PLC base slots is reduced, costs due to purchase of individual modules are decreased, and a volume of the entire system is reduced.

Furthermore, each signal input to the input means is processed with a different path inside the input means according to its type, which enables one input means to process all kinds of input signals. As a result, can be solved the conventional inconvenience and high costs resulting from that input modules have to be respectively provided according to a type of sensors used to perform temperature measurement.

Furthermore, since the control means simplifies a control path by respectively controlling the input means and the output means, time taken to perform input, control, and output functions is reduced. Accordingly, a temperature control performance can be enhanced.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A temperature control module, comprising:
an input means (100) for receiving an analogue signal indicating a measured temperature value of an object, and converting it into a digital signal;
a control means (200) for determining a type of the analogue signal input to the input means (100) based on predetermined parameters, controlling the input means (100) to convert an input analogue signal into a digital signal based on the signal type, and performing PID control based on the measured temperature value and a predetermined target value thereby calculating a modulated value; and
an output means (300) for outputting the calculated modulated value under control of the control means,
**characterized in that**
the input means (100) comprises:
first and second input circuit sectors (110, 120) for receiving an analogue signal indicating a measured temperature value of an object, respectively;
a signal stabilization circuit sector (130) for stabilizing an analogue signal transmitted from the first input circuit sector (110), and then transmitting the stabilized analogue signal to the second input circuit sector (120); and
an A/D conversion circuit sector (140) for converting the analogue signal transmitted from the second input circuit sector (120) into a digital signal,
wherein the analogue signal input to the input means (100) is one or more of a current signal, a voltage signal, a thermocouple signal, and a Resistance Temperature Detector (RTD) signal
wherein when the analogue signal input to the input means (100) is a current signal or a voltage signal, the control means (200) generates a switch control signal so that the first input circuit sector (110) transmits the current signal or the voltage signal to the signal stabilization circuit sector (130), and so that the second input circuit sector (120) can transmit the current signal or the voltage signal stabilized by the signal stabilization circuit sector (130) to the A/D conversion circuit sector(140).

2. The temperature control module of claim 1, further comprising a first insulation circuit sector (150) for insulating the input means (100) and the control means (200) from noise.

3. The temperature control module of claim 1, wherein when the analogue signal input to the input means (100) is a thermocouple signal or a RTD signal, the control means (200) generates a switch control signal so that the first input circuit sector (110) transmits the thermocouple signal or the RTD signal to the second input circuit sector (120), and so that the second input circuit sector (120) transmits the thermocouple signal or the RTD signal to the A/D conversion circuit sector (140).

4. The temperature control module of claim 1, wherein the control means (200) comprises:
an interface circuit sector (210) for receiving the predetermined parameters;
a PID calculation circuit sector (220) for performing PID control based on the measured temperature value and the predetermined target value thereby calculating a modulated value;
a memory (230) for storing the predetermined parameters and the modulated value; and
a controller (240) for determining a type of the analogue signal input to the input means (100) based on the predetermined parameters, and controlling so that the input means (100) converts the input analogue signal into a digital signal based on the signal type,
the controller (240) for generating a Pulse Width Modulation (PWM) control signal based on the modulated value obtained by the PID calculation circuit sector (220) and the predetermined parameters, and controlling so that the PWM control signal is transmitted to the output means (300), and the output means (300) outputs the modulated value.

5. The temperature control module of claim 4, wherein the output means (300) comprises:
a second insulation circuit sector (310) for insulating the control means (200) and the output means (300); and
an output circuit sector (320) for outputting the calculated modulated value according to the PWM control signal.

6. The temperature control module of claim 5, wherein wiring for cooling output, and wiring for heating output are formed at the output circuit sector (320), and
wherein the calculated modulated value is output to the wiring for cooling output or the wiring for heating output according to the PWM control signal.

7. A temperature control method, comprising:
determining a type of an analogue signal indicating a measured temperature value of an object input to an input means (100) from predetermined parameters so as to control a temperature of the object by a control means (200);
controlling, by the control means (200), so that the input means (100) converts the analogue signal into a digital signal based on the type of the analogue signal;
calculating a modulated value by performing PID control by the control means (200), based on the measured temperature value converted into a digital signal and a predetermined target value;
generating, by the control means (200), a Pulse Width Modulation (PWM) control signal based on the modulated value and the preset parameters, and then transmitting the PWM control signal to the output means (300); and
outputting, by the output means (300), the calculated modulated value according to the PWM control signal,
**characterized in that**
the analogue signal input to the input means is one or more of a current signal, a voltage signal, a thermocouple signal, and a Resistance Temperature Detector (RTD) signal; and
the controlling by the control means (200) so that the analogue signal is converted into a digital signal comprises:
when the analogue signal is a current signal or a voltage signal, controlling the input means so that the analogue signal is converted into a digital signal through a signal stabilization process to reduce a size of the signal and to perform impedance matching.

8. The temperature control method of claim 7, wherein the controlling by the control means (200) so that the analogue signal is converted into a digital signal comprises:
when the analogue signal is a thermocouple signal or a RTD signal, controlling the input means so that the analogue signal is directly converted into a digital signal without a signal stabilization process.

9. The temperature control method of claim 7, wherein the PWM control signal includes information relating to an output form including heating output and cooling output.

10. The temperature control method of claim 7, wherein the outputting the calculated modulated value by the output means (300) comprises:
when the information included in the PWM control signal indicates heating output, outputting the calculated modulated value to wiring for heating output, and
when the information included in the PWM control signal indicates cooling output, outputting the calculated modulated value to wiring for cooling output.

## Patentansprüche

1. Temperatursteuermodul, umfassend:
eine Eingabeeinrichtung (100) zum Empfangen eines analogen Signals, das einen gemessenen Temperaturwert eines Objekts angibt, und dessen Umwandlung in ein digitales Signal;
eine Steuereinrichtung (200) zum Bestimmen eines Typs des in die Eingabeeinrichtung (100) eingegebenen analogen Signals basierend auf vorbestimmten Parametern, zum Steuern der Eingabeeinrichtung (100), um ein analoges Eingangssignal in ein auf dem Signaltyp basierendes digitales Signal umzuwandeln, und Durchführen einer PID-Steuerung basierend auf dem gemessenen Temperaturwert und einem vorbestimmten Zielwert, wodurch ein modulierter Wert berechnet wird; und
eine Ausgabeeinrichtung (300) zum Ausgeben des berechneten modulierten Wertes unter Steuerung der Steuereinrichtung,
**dadurch gekennzeichnet, dass**
die Eingabeeinrichtung (100) umfasst:
erste und zweite Eingangsschaltungssektoren (110, 120) zum Empfangen eines analogen Signals, das jeweils einen gemessenen Temperaturwert eines Objekts angibt;
einen Signalstabilisierungsschaltungssektor (130) zum Stabilisieren eines von dem ersten Eingangsschaltungssektor (110) übertragenen analogen Signals und anschließendes Übertragen des stabilisierten analogen Signals an den zweiten Eingangsschaltungssektor (120); und
einen A/D-Umwandlungsschaltungssektor (140) zum Umwandeln des vom zweiten Eingangsschaltungssektor (120) übertragenen analogen Signals in ein digitales Signal,
wobei das in die Eingabeeinrichtung (100) eingegebene Analogsignal ein oder mehrere eines Stromsignals, eines Spannungssignals, eines Thermoelementsignals und eines Widerstandstemperaturdetektorsignals ("Resistance Temperature Detector, RTD") ist,
wobei, wenn das in die Eingabeeinrichtung (100) eingegebene analoge Signal ein Stromsignal oder ein Spannungssignal ist, die Steuereinrichtung (200) ein Schaltsteuersignal erzeugt, sodass der erste Eingangsschaltungssektor (110) das Stromsignal oder Spannungssignal an den Signalstabilisierungsschaltungssektor (130) überträgt, und sodass der zweite Eingangsschaltungssektor (120) das Stromsignal oder das Spannungssignal, das durch den Signalstabilisierungsschaltungssektor (130) stabilisiert ist, an den A/D-Umwandlungsschaltungssektor (140) überträgt.

2. Temperatursteuermodul nach Anspruch 1, ferner umfassend einen ersten Isolationsschaltungssektor (150) zum Isolieren der Eingabeeinrichtung (100) und der Steuereinrichtung (200) von Störgeräuschen.

3. Temperatursteuermodul nach Anspruch 1, wobei, wenn das in die Eingabeeinrichtung (100) eingegebene analoge Signal ein Thermoelementsignal oder ein RTD-Signal ist, die Steuereinrichtung (200) ein Schaltsteuersignal erzeugt, sodass der erste Eingangsschaltungssektor (110) das Thermoelementsignal oder das RTD-Signal an den zweiten Eingangsschaltungssektor (120) überträgt, und so der zweite Eingangsschaltungssektor (120) das Thermoelementsignal oder das RTD-Signal an den A/D-Umsetzungsschaltungssektor (140) überträgt.

4. Temperatursteuermodul nach Anspruch 1, wobei die Steuereinrichtung (200) umfasst:
einen Schnittstellenschaltungssektor (210) zum Empfangen der vorbestimmten Parameter;
einen PID-Berechnungsschaltungssektor (220) zum Durchführen einer PID-Steuerung basierend auf dem gemessenen Temperaturwert und dem vorbestimmten Zielwert, um dadurch einen modulierten Wert zu berechnen;
einen Speicher (230) zum Speichern der vorbestimmten Parameter und des modulierten Werts; und
einen Controller (240) zum Bestimmen eines Typs des in die Eingabeeinrichtung (100) eingegebenen analogen Signals basierend auf den vorbestimmten Parametern und zum Steuern, sodass die Eingabeeinrichtung (100) das analoge Eingangssignal in ein auf dem Signaltyp basierendes digitales Signal umwandelt,
der Controller (240) zum Erzeugen eines Pulsbreitenmodulations(PWM)-Steuersignals basierend auf dem durch den PID-Berechnungsschaltungssektor (220) erhaltenen modulierten Wert und den vorbestimmten Parametern und zum Steuern, sodass das PWM-Steuersignal an die Ausgabeeinrichtung (300) übertragen wird und die Ausgabeeinrichtung (300) den modulierten Wert ausgibt.

5. Temperatursteuermodul nach Anspruch 4, wobei die Ausgabeeinrichtung (300) umfasst:
einen zweiten Isolationsschaltungssektor (310) zum Isolieren der Steuereinrichtung (200) und der Ausgabeeinrichtung (300); und
einen Ausgangsschaltungssektor (320) zum Ausgeben des berechneten modulierten Werts gemäß dem PWM-Steuersignal.

6. Temperatursteuermodul nach Anspruch 5, wobei die Verkabelung für die Kühlleistung und die Verkabelung für die Heizleistung am Ausgangsschaltungssektor (320) ausgebildet sind und
der berechnete modulierte Wert an die Verkabelung für die Kühlleistung oder die Verkabelung für die Heizleistung entsprechend dem PWM-Steuersignal ausgegeben wird.

7. Temperatursteuerverfahren, umfassend:
Bestimmen eines Typs eines analogen Signals, das einen gemessenen Temperaturwert eines in eine Eingabeeinrichtung (100) eingegebenen Objekts aus vorbestimmten Parametern anzeigt, um so eine Temperatur des Objekts durch eine Steuereinrichtung (200) zu steuern;
Steuern durch die Steuereinrichtung (200), derart, dass die Eingabeeinrichtung (100) das analoge Signal basierend auf dem Typ des analogen Signals in ein digitales Signal umwandelt;
Berechnen eines modulierten Wertes durch Durchführen einer PID-Steuerung durch die Steuereinrichtung (200) basierend auf dem gemessenen Temperaturwert, der in ein digitales Signal umgewandelt wird, und basierend auf einem vorbestimmten Zielwert;
Erzeugen eines Pulsbreitenmodulations(PWM)-Steuersignals basierend auf dem modulierten Wert und den voreingestellten Parametern durch die Steuereinrichtung (200) und anschließendes Übertragen des PWM-Steuersignals an die Ausgabeeinrichtung (300); und
Ausgeben des berechneten modulierten Werts gemäß dem PWM-Steuersignal durch die Ausgabeeinrichtung (300),
**dadurch gekennzeichnet, dass**
das in die Eingabeeinrichtung eingegebene Analogsignal ein oder mehrere von einem Stromsignal, einem Spannungssignal, einem Thermoelementsignal und einem Widerstandstemperaturdetektorsignal (RTD) ist; und
die Steuerung durch die Steuereinrichtung (200), derart, dass das analoge Signal in ein digitales Signal umgewandelt wird, umfassend:
wenn das analoge Signal ein Stromsignal oder ein Spannungssignal ist, Steuern der Eingabeeinrichtung, derart, dass das analoge Signal durch einen Signalstabilisierungsprozess in ein digitales Signal umgewandelt wird, um eine Größe des Signals zu reduzieren und eine Impedanzanpassung durchzuführen.

8. Temperatursteuerverfahren nach Anspruch 7, wobei das Steuern durch die Steuereinrichtung (200) derart ist, dass das analoge Signal in ein digitales Signal umgewandelt wird, umfassend:
wenn das analoge Signal ein Thermoelementsignal oder ein RTD-Signal ist, Steuern der Eingabeeinrichtung, derart, dass das analoge Signal ohne Signalstabilisierungsprozess direkt in ein digitales Signal umgewandelt wird.

9. Temperatursteuerverfahren nach Anspruch 7, wobei das PWM-Steuersignal Informationen beinhaltet, die sich auf eine Ausgabeform beziehen, einschließlich der Heizleistung und der Kühlleistung.

10. Temperatursteuerverfahren nach Anspruch 7, wobei das Ausgeben des berechneten modulierten Werts durch die Ausgabeeinrichtung (300) umfasst:
wenn die im PWM-Steuersignal enthaltenen Informationen eine Heizleistung anzeigen, Ausgeben des berechneten modulierten Werts an eine Verkabelung für die Heizleistung und
wenn die im PWM-Steuersignal enthaltenen Informationen eine Kühlleistung anzeigen, Ausgeben des berechneten modulierten Wertes an eine Verkabelung für eine Kühlleistung.

## Revendications

1. Module de régulation de température comprenant :
un moyen d'entrée (100) destiné à recevoir un signal analogique indiquant une valeur de température mesurée d'un objet et à le convertir en un signal numérique ;
un moyen de régulation (200) destiné à déterminer un type de l'entrée de signal analogique au moyen d'entrée (100) sur la base de paramètres prédéterminés, à effectuer une commande de sorte que le moyen d'entrée (100) convertisse un signal analogique d'entrée en signal numérique sur la base du type de signal, et à réaliser une régulation PID sur la base de la valeur de température mesurée et d'une valeur cible prédéterminée pour ainsi calculer une valeur modulée ; et
un moyen de sortie (300) destiné à produire en sortie la valeur modulée calculée sous la régulation du moyen de régulation,
**caractérisé en ce que**
le moyen d'entrée (100) comprend :
des premier et deuxième secteurs de circuit d'entrée (110, 120) destinés à recevoir un signal analogique indiquant une valeur de température mesurée d'un objet, respectivement ;
un secteur de circuit de stabilisation de signal (130) destiné à stabiliser un signal analogique transmis depuis le premier secteur de circuit d'entrée (110), puis à transmettre le signal analogique stabilisé au deuxième secteur de circuit d'entrée (120) ; et
un secteur de circuit de conversion analogique-numérique (140) destiné à convertir le signal analogique transmis depuis le deuxième secteur de circuit d'entrée (120) en un signal numérique,
dans lequel l'entrée de signal analogique au moyen d'entrée (100) est au moins l'un d'un signal de courant, d'un signal de tension, d'un signal de thermocouple et d'un signal de détecteur de température à résistance (RTD)
dans lequel lorsque l'entrée de signal analogique au moyen d'entrée (100) est un signal de courant ou un signal de tension, le moyen de régulation (200) génère un signal de commande de commutation de sorte que le premier secteur de circuit d'entrée (110) transmette le signal de courant ou le signal de tension au secteur de circuit de stabilisation de signal (130), et de sorte que le deuxième secteur de circuit d'entrée (120) puisse transmettre le signal de courant ou le signal de tension stabilisé par le secteur de circuit de stabilisation de signal (130) au secteur de circuit de conversion analogique-numérique (140) .

2. Module de régulation de température selon la revendication 1, comprenant en outre un premier secteur de circuit d'isolation (150) destiné à isoler le moyen d'entrée (100) et le moyen de régulation (200) du bruit.

3. Module de régulation de température selon la revendication 1, dans lequel lorsque l'entrée de signal analogique au moyen d'entrée (100) est un signal de thermocouple ou un signal RTD, le moyen de régulation (200) génère un signal de commande de commutation de sorte que le premier secteur de circuit d'entrée (110) transmette le signal de thermocouple ou le signal RTD au deuxième secteur de circuit d'entrée (120), et de sorte que le deuxième secteur de circuit d'entrée (120) transmette le signal de thermocouple ou le signal RTD au secteur de circuit de conversion analogique-numérique (140).

4. Module de régulation de température selon la revendication 1, dans lequel le moyen de régulation (200) comprend :
un secteur de circuit d'interface (210) destiné à recevoir les paramètres prédéterminés ;
un secteur de circuit de calcul PID (220) destiné à effectuer une régulation PID sur la base de la valeur de température mesurée et de la valeur cible prédéterminée pour ainsi calculer une valeur modérée ;
une mémoire (230) destinée à stocker les paramètres prédéterminés et la valeur modulée ; et
un dispositif de commande (240) destiné à déterminer un type de l'entrée de signal analogique au moyen d'entrée (100) sur la base des paramètres prédéterminés, et à effectuer une commande de sorte que le moyen d'entrée (100) convertisse le signal analogique d'entrée en un signal numérique sur la base du type de signal,
le dispositif de commande (240) étant destiné à générer un signal de commande à modulation de largeur d'impulsions (MLI) sur la base de la valeur modulée obtenue par le secteur de circuit de calcul PID (220) et des paramètres prédéterminés, et à effectuer une commande de sorte que le signal de commande MLI soit transmis au moyen de sortie (300), et que le moyen de sortie (300) produise en sortie la valeur modulée.

5. Module de régulation de température selon la revendication 4, dans lequel le moyen de sortie (300) comprend :
un deuxième secteur de circuit d'isolation (310) destiné à isoler le moyen de régulation (200) et le moyen de sortie (300) ; et
un secteur de circuit de sortie (320) destiné à produire en sortie la valeur modulée calculée selon le signal de commande MLI.

6. Module de régulation de température selon la revendication 5, dans lequel un câblage de sortie de refroidissement et un câblage de sortie chauffante sont formés au niveau du secteur de circuit de sortie (320), et
dans lequel la valeur modulée calculée est produite en sortie vers le câblage de sortie de refroidissement ou le câblage de sortie chauffante selon le signal de commande MLI.

7. Procédé de régulation de température, comprenant :
la détermination d'un type d'un signal analogique indiquant une valeur de température mesurée d'une entrée d'objet à un moyen d'entrée (100) à partir de paramètres prédéterminés de façon à réguler une température de l'objet par un moyen de régulation (200) ;
la régulation, par le moyen de régulation (200), de sorte que le moyen d'entrée (100) convertisse le signal analogique en un signal numérique sur la base du type du signal analogique ;
le calcul d'une valeur modulée par la réalisation d'une régulation PID par le moyen de régulation (200), sur la base de la valeur de température mesurée convertie en un signal numérique et d'une valeur cible prédéterminée ;
la génération, par le moyen de régulation (200), d'un signal de commande à modulation de largeur d'impulsions (MLI) sur la base de la valeur modulée et des paramètres prédéfinis, puis la transmission du signal de commande MLI au moyen de sortie (300) ; et
la production en sortie, par le moyen de sortie (300), de la valeur modulée calculée selon le signal de commande MLI,
**caractérisé en ce que**
l'entrée de signal analogique au moyen d'entrée est au moins l'un d'un signal de courant, d'un signal de tension, d'un signal de thermocouple et d'un signal de détecteur de température à résistance (RTD) ; et
la régulation par le moyen de régulation (200) de sorte que le signal analogique soit converti en un signal numérique comprend :
lorsque le signal analogique est un signal de courant ou un signal de tension, la commande du moyen d'entrée de sorte que le signal analogique soit converti en un signal numérique par le biais d'un processus de stabilisation de signal pour réduire une taille du signal et effectuer une adaptation d'impédance.

8. Procédé de régulation de température selon la revendication 7, dans lequel la régulation par le moyen de régulation (200) de sorte que le signal analogique soit converti en un signal numérique comprend :
lorsque le signal analogique est un signal de thermocouple ou un signal RTD, la commande du moyen d'entrée de sorte que le signal analogique soit directement converti en un signal numérique sans processus de stabilisation de signal.

9. Procédé de régulation de température selon la revendication 7, dans lequel le signal de commande MLI inclut des informations relatives à une forme de sortie comprenant une sortie chauffante et une sortie de refroidissement.

10. Procédé de régulation de température selon la revendication 7, dans lequel la production en sortie de la valeur modulée calculée par le moyen de sortie (300) comprend :
lorsque les informations incluses dans le signal de commande MLI indiquent une sortie chauffante, la production en sortie de la valeur modulée calculée vers le câblage de sortie chauffante, et
lorsque les informations incluses dans le signal de commande MLI indiquent une sortie de refroidissement, la production en sortie de la valeur modulée calculée vers le câblage de sortie de refroidissement.
